# FASCICULE DE BREVET EUROPEEN

(11) **EP 2 588 364 B1**
(45) Date de publication et mention de la délivrance du brevet: **18.05.2016**
(21) Numéro de dépôt: 11727259.1
(22) Date de dépôt: 24.05.2011
(51) Int. Cl.: B62D 65/06, G01B 5/00

(54) **GABARIT ET PROCEDE DE MONTAGE D'UN COUVERCLE DE COFFRE SUR UNE CAISSE DE VEHICULE AUTOMOBILE**
MONTAGELEHRE UND MONTAGEVERFAHREN EINER KOFFERRAUMHAUBE AUF EINE KAROSSERIE
GAUGE AND METHOD FOR MOUNTING A TAILGATE ON A CAR BODY

(30) Priorité: 02.07.2010 FR 1055359
(43) Date de publication de la demande: 08.05.2013
(73) Titulaire: Peugeot Citroën Automobiles SA, 78140 Vélizy Villacoublay (FR)
(72) Inventeur: AUDUC, Patrice, F-90700 Chatenois Les Forges (FR); LAUTRAM, Daniel, F-35580 Guignen (FR)
(74) Mandataire: Fosse, Danièle
(86) Numéro de dépôt international: PCT/FR2011/051176
(87) Numéro de publication internationale: WO 2012/001253

(56) Documents cités:
- DE-A1-102008 039 961
- DE-U1- 29 720 500
- DE-U1- 29 816 529
- FR-A1- 2 933 949
- JP-A- 2003 095 158

## Description

La présente invention se rapporte à un gabarit de montage d'un couvercle de coffre sur une caisse de véhicule automobile, et à un procédé de montage associé utilisant deux tels gabarits de montage.

Elle se rapporte plus particulièrement à un gabarit de montage comprenant une structure sur laquelle sont montés des moyens de maintien du couvercle destinés à maintenir un bord latéral dudit couvercle et des moyens d'appui du gabarit sur une aile latérale de la caisse, ces moyens de maintien et ces moyens d'appui permettant d'assurer le positionnement du couvercle par rapport à la caisse suivant une première direction verticale et suivant une deuxième et une troisième directions horizontales, toutes orthogonales entre elles.

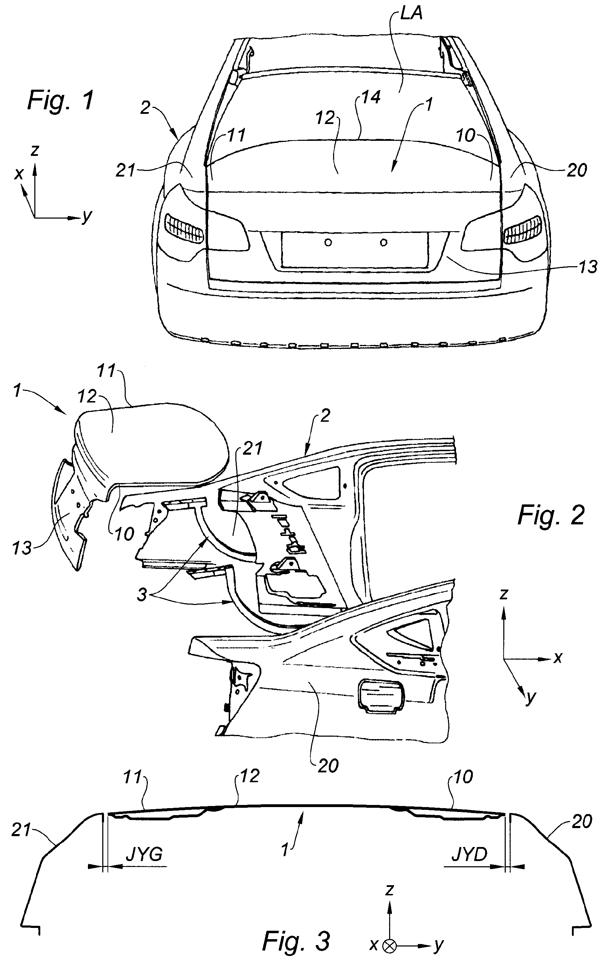

Par couvercle de coffre, on désigne dans le présent texte le panneau ou ouvrant arrière mobile de la carrosserie qui fournit l'accès au coffre à partir de l'extérieur du véhicule. A titre illustratif, la figure 1 représente l'arrière d'un véhicule automobile de type tri-corps équipé d'un couvercle de coffre 1 monté sur la caisse 2 du véhicule, et plus particulièrement sur les ailes latérales arrière respectivement droite 20 et gauche 21. Comme représenté, de manière schématique sur la figure 2, le couvercle de coffre 1 est monté sur la caisse 2 du véhicule de type tri-corps par l'intermédiaire de deux charnières en col de cygne 3 qui servent à articuler le couvercle de coffre 1 sur la caisse 2. Le couvercle de coffre 1 présente une partie supérieure 12 sensiblement horizontale et pourvue d'un bord avant 14 sensiblement jointif avec la lunette arrière LA du véhicule, et une partie rabattue 13 arrière sensiblement verticale et supportant classiquement la plaque d'immatriculation du véhicule.

Les jeux et affleurements, en particulier ceux qui concernent le couvercle de coffre 1 et les ailes latérales arrière 20, 21, doivent assurer, par leur qualité, la continuité parfaite entre les pièces et les surfaces et exercer, ainsi, un attrait immédiat sur l'utilisateur. Le réglage de la position du couvercle de coffre 1 par rapport aux ailes latérales arrière 20, 21 adjacentes doit se faire selon les trois directions principales du véhicule automobile, à savoir la première direction verticale Z (dite direction verticale) s'étendant verticalement de bas en haut, la deuxième direction horizontale et longitudinale X (dite direction longitudinale) s'étendant dans la direction longitudinale du véhicule d'avant en arrière, et la troisième direction horizontale et transversale Y (dite direction transversale) s'étendant dans la direction transversale du véhicule de gauche à droite. Ces directions X, Y, Z sont toutes orthogonales entre elles.

La figure 3 illustre de manière schématique une coupe transversale de l'arrière du véhicule de la figure 1, dans un plan de coupe parallèle au plan (YZ), illustrant les jeux respectivement droit JYD et gauche JYG entre les bords latéraux droit 10 et gauche 11 du couvercle 1 et les ailes latérales arrière 20, 21 correspondantes de la caisse 2 suivant la direction transversale Y ; ces jeux JYD, JYG étant localisés dans les interstices entre ces bord latéraux 10, 11 du couvercle de coffre 1 et les ailes latérales arrière 20, 21 concernées. Il est préférable que ces jeux JYD, JYG soient réduits au minimum et sensiblement égaux pour des raisons de symétrie des jeux et donc d'esthétisme.

Pour réaliser le montage du couvercle de coffre 1 sur la caisse 2 du véhicule automobile, il est connu d'employer deux gabarits indépendants du type précité, avec un gabarit sur le côté latéral droit du véhicule et un autre gabarit sur le côté latéral gauche du véhicule. Ces gabarits permettent la mise en référence du couvercle de coffre 1 sur la caisse 2 du véhicule. Plus spécifiquement, ces deux gabarits assurent le centrage du couvercle de coffre 1 par rapport aux ailes latérales arrière 20, 21 du véhicule.

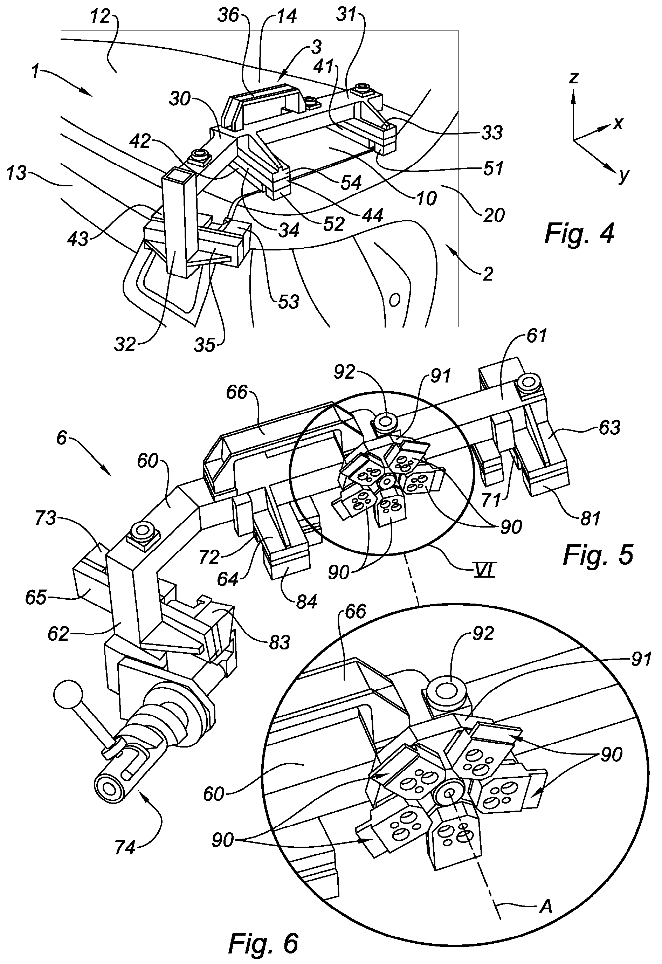

La figure 4 illustre un gabarit 3 connu utilisable sur le côté latéral droit d'un véhicule automobile ; le gabarit utilisable sur le côté latéral gauche du véhicule est identique à ce gabarit 3, à l'exception qu'il présente une configuration symétrique à celle de ce gabarit 3 par rapport au plan médian (XZ) du véhicule.

Ce gabarit 3 comporte une structure comprenant :
- une poutre 30 arquée, de forme adaptée pour suivre celle du couvercle 1 avec ses deux parties 12, 14 sensiblement orthogonales, cette poutre 30 étant pourvue d'une première extrémité 31 et d'une deuxième extrémité 32 opposée ; et
- trois traverses 33, 34, 35 montées de manière transversale sur la poutre 30, à savoir une première traverse 33 disposée sur la première extrémité 31 de la poutre 30, une deuxième traverse 34 disposée entre les première et deuxième extrémités 31, 32 de la poutre 30, et une troisième traverse 35 disposée sur la deuxième extrémité 32 de la poutre 30.

Le gabarit 3 comporte en outre des moyens de maintien du couvercle 1 conçus pour maintenir le bord latéral droit 10 du couvercle 1, à savoir :
- des premiers moyens de maintien 41 disposés sur la première traverse 33 afin de supporter la partie supérieure 12 du couvercle 1 à proximité du bord avant 14, ces premiers moyens de maintien 41 permettant d'assurer le positionnement du couvercle 1 par rapport à la caisse 2 suivant la direction verticale Z ;
- des deuxièmes moyens de maintien 42 disposés sur la deuxième traverse 34 afin de supporter la partie supérieure 12 du couvercle 1 à proximité de la partie rabattue 13, ces deuxièmes moyens de maintien 42 permettant d'assurer le positionnement du couvercle 1 par rapport à la caisse 2 suivant la direction verticale Z ;
- des troisièmes moyens de maintien 43 disposés sur la troisième traverse 35 afin de supporter la partie rabattue 13 du couvercle 1, ces troisièmes moyens de maintien 43 permettant d'assurer le positionnement du couvercle 1 par rapport à la caisse 2 suivant la direction longitudinale X.

Le gabarit 3 comporte également des moyens d'appui du gabarit 3 sur l'aile latérale arrière droite 20 de la caisse 2, à savoir :
- des premiers moyens d'appui 51 disposés sur la première traverse 33 afin de venir en appui sur l'aile droite 20 de manière adjacente aux premiers moyens de maintien 41 et à la partie supérieure 12 du couvercle 1, ces premiers moyens d'appui 51 permettant d'assurer le positionnement du couvercle 1 par rapport à la caisse 2 suivant la direction verticale Z ;
- des deuxièmes moyens d'appui 52 disposés sur la deuxième traverse 34 afin de venir en appui sur l'aile droite 20 de manière adjacente aux deuxièmes moyens de maintien 42 et à la partie supérieure 12 du couvercle 1, ces deuxièmes moyens d'appui 52 permettant d'assurer le positionnement du couvercle 1 par rapport à la caisse 2 suivant la direction verticale Z ;
- des troisièmes moyens d'appui 53 disposés sur la troisième traverse 35 afin de venir en appui sur l'aile droite 20 de manière adjacente aux troisièmes moyens de maintien 43 et à la partie rabattue 13 du couvercle 1, ces troisièmes moyens de maintien 43 permettant d'assurer le positionnement du couvercle 1 par rapport à la caisse 2 suivant la direction longitudinale X.

Pour assurer le positionnement du couvercle 1 par rapport à la caisse 2 suivant la direction transversale Y, et ainsi régler le jeu droit JYD précité entre le bord latéral droit 10 du couvercle 1 et l'aile latérale arrière droite 20, il est connu d'employer des cales de réglage (non visibles mais localisées sur la figure 4 par les références 44 et 54) démontables montées sur la deuxième traverse 34. Suivant la géométrie de la caisse 2, et plus particulièrement des ailes 20, 21, et suivant la géométrie du couvercle 1, il est nécessaire de démonter la ou les cales de réglage afin de les remplacer par d'autres cales d'épaisseur distincte. Ainsi, la mise en géométrie du couvercle de coffre 1 par rapport aux ailes latérales adjacentes 20, 21, c'est-a-dire le réglage de l'affleurement ou jeu suivant la direction transversale Y, est une opération réalisée manuellement par démontage et montage de cales de réglage de différentes tailles devant être positionnées dans les interstices entre le couvercle de coffre 1 et les ailes arrière 20, 21 de la caisse 2.

L'ensemble de ces moyens 41, 42, 43, 44 et 51, 52, 53, 54 permettent d'assurer le montage isostatique et centré du couvercle 1 sur la caisse 2. Le gabarit 3 comporte également un moyen de préhension 36, en l'occurrence une poignée, monté sur la poutre 30 afin de permettre la préhension et la manipulation du gabarit 3.

Cette opération de montage/démontage des cales de réglage sur les deux gabarits indépendants présente de nombreux inconvénients : nécessité d'immobiliser le gabarit pour effectuer ces opérations de démontage et de montage, risque d'un mauvais centrage du couvercle de coffre lié au risque d'erreur lors du remontage des cales sur les gabarits (oubli ou erreur dans le choix des cales de réglage).

La présente invention a pour but de résoudre ces inconvénients avec un gabarit de montage permettant de régler les jeux suivant la direction transversale Y entre le couvercle de coffre et les ailes latérales arrière de la caisse, sans nécessiter d'opérations de montage et de démontage longues et sources d'erreur.

A cet effet, elle propose un gabarit de montage d'un couvercle de coffre sur une caisse de véhicule automobile selon l'invention, du type comprenant une structure sur laquelle sont montés des moyens de maintien du couvercle destinés à maintenir un bord latéral dudit couvercle et des moyens d'appui du gabarit sur une aile latérale de la caisse, ces moyens de maintien et ces moyens d'appui permettant d'assurer le positionnement du couvercle par rapport à la caisse suivant une direction verticale et une direction longitudinale du véhicule, remarquable en ce qu'il comporte en outre une série de cales de réglage du jeu entre le bord latéral du couvercle et l'aile latérale de la caisse suivant une direction transversale du véhicule, lesdites cales étant d'épaisseurs distinctes et étant toutes montées sur un support monté mobile sur la structure pour permettre de positionner l'une ou l'autre des différentes cales dans l'interstice entre le bord latéral du couvercle et l'aile latérale de la caisse afin de permettre le réglage dudit jeu.

Ainsi, avant le montage du couvercle sur la caisse, il suffit de mettre en mouvement le support mobile afin de sélectionner la cale de réglage adaptée de sorte que, lors du montage du couvercle, cette cale de réglage se positionne dans l'interstice entre le bord latéral du couvercle et l'aile latérale de la caisse afin de permettre le réglage de ce jeu suivant la direction transversale Y du véhicule. Les autres cales, non sélectionnées, occupent alors toutes une position de non interférence avec le couvercle et la caisse afin de ne pas gêner le montage du couvercle sur la caisse.

Selon une caractéristique, le support mobile est un support rotatif, notamment du type barillet, de sorte qu'il suffit de tourner le barillet pour sélectionner la cale de réglage adaptée au montage concerné.

Selon une autre caractéristique, le jeu de cales comprend entre trois et huit cales d'épaisseurs distinctes, afin de ne pas trop encombrer ou alourdir le gabarit.

Conformément à d'autres caractéristiques avantageuses de l'invention :
- le gabarit comprend des moyens d'actionnement conçus pour mettre en mouvement le support mobile afin de permettre le positionnement de l'une ou l'autre des différentes cales dans l'interstice entre le bord latéral du couvercle et l'aile latérale de la caisse ; et
- les moyens d'actionnement sont manuels

Dans une réalisation particulière, les cales présentent des moyens de signalisation visuelle distincts, notamment réalisés sous la forme de couleurs distinctes, permettant de distinguer visuellement les cales entre elles. Cette caractéristique est avantageuse pour sélectionner les mêmes cales, autrement les cales de même épaisseur, entre le gabarit utilisé sur le côté latéral droit du véhicule et le gabarit utilisé sur le côté latéral gauche du véhicule. L'opérateur visualise ainsi rapidement et simplement que les cales de réglage sélectionnées sont identiques à droite comme à gauche.

Selon l'invention, le gabarit comprend des moyens de verrouillage conçus pour verrouiller le support mobile dans son mouvement afin de le bloquer dans une position dans laquelle la cale sélectionnée sera, lors du montage, correctement positionnée pour s'insérer dans l'interstice entre le bord latéral du couvercle et l'aile latérale de la caisse.

Selon l'invention, les moyens de verrouillage comportent un doigt coopérant avec le support mobile, ledit doigt verrouillant ledit support dans une première position et autorisant le mouvement du support mobile dans une seconde position.

L'invention se rapporte également à un kit de montage d'un couvercle de coffre sur une caisse de véhicule automobile, du type comportant deux gabarits indépendants et conformes à l'invention, dont un premier gabarit à utiliser sur le côté latéral droit du véhicule et un second gabarit à utiliser sur le côté latéral gauche du véhicule.

L'invention concerne aussi un procédé de montage d'un couvercle de coffre sur une caisse de véhicule automobile, consistant à utiliser un kit tel que décrit ci-dessus de la façon suivante :
- les supports mobiles des deux gabarits sont préalablement mis en mouvement pour sélectionner des cales de même épaisseur sur les deux gabarits ;
- le premier gabarit est utilisé sur le côté latéral droit du véhicule en maintenant le bord latéral droit du couvercle et en venant en appui sur l'aile latérale droite de la caisse ;
- le second gabarit est utilisé sur le côté latéral gauche du véhicule en maintenant le bord latéral gauche du couvercle et en venant en appui sur l'aile latérale gauche de la caisse.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1, déjà commentée, représente schématiquement l'arrière d'un véhicule automobile ;
- la figure 2, déjà commentée, est une vue schématique en perspective, éclatée, de l'arrière d'une caisse et d'un couvercle de coffre de véhicule automobile ;
- la figure 3, déjà commentée, est une vue schématique en coupe transversale de l'arrière du véhicule de la figure 1 ;
- la figure 4, déjà commentée, est une vue schématique en perspective du côté latéral droit de l'arrière d'un véhicule automobile lors de l'étape de montage du couvercle de coffre sur la caisse du véhicule au moyen d'un gabarit de montage connu ;
- la figure 5 est une vue schématique en perspective d'un gabarit de montage conforme à l'invention ; et
- la figure 6 est une vue agrandie et détaillée de la zone VI de la figure 5.

Pour la suite de la description, nous nous référerons utilement au préambule dans lequel le couvercle de coffre 1 et la caisse 2 ont déjà été décrits et ne seront pas décrits à nouveau.

Un gabarit 6 conforme à l'invention est décrit ci-après en référence aux figures 5 et 6. Le gabarit 6 illustré sur les figures 5 et 6 est à utiliser sur le côté latéral droit d'un véhicule automobile. Un gabarit conforme à l'invention et à utiliser sur le côté latéral gauche du véhicule est identique à ce gabarit 6, à l'exception qu'il présente une configuration symétrique à celle de ce gabarit 6 par rapport au plan médian (XZ) du véhicule.

Le gabarit 6 comporte une structure comprenant :
- une poutre 60 arquée, de forme adaptée pour suivre celle du couvercle 1 avec ses deux parties 12, 14 sensiblement orthogonales, cette poutre 60 étant pourvue d'une première extrémité 61 et d'une deuxième extrémité 62 opposée ; et
- trois traverses 63, 64, 65 montées de manière transversale sur la poutre 60, à savoir une première traverse 63 disposée sur la première extrémité 61 de la poutre 60, une deuxième traverse 64 disposée entre les première et deuxième extrémités 61, 62 de la poutre 60, et une troisième traverse 65 disposée sur la deuxième extrémité 62 de la poutre 60.

Le gabarit 6 comporte également un moyen de préhension 66, en l'occurrence une poignée, monté sur la poutre 60 afin de permettre la préhension et la manipulation du gabarit 6.

Le gabarit 6 comporte en outre des moyens de maintien du couvercle 1 conçus pour maintenir le bord latéral droit 10 du couvercle 1, à savoir :
- des premiers moyens de maintien 71 disposés sur la première traverse 63 afin de supporter la partie supérieure 12 du couvercle 1 à proximité du bord avant 14, ces premiers moyens de maintien 71 permettant d'assurer le positionnement du couvercle 1 par rapport à la caisse 2 suivant la direction verticale Z ;
- des deuxièmes moyens de maintien 72 disposés sur la deuxième traverse 64 afin de supporter la partie supérieure 12 du couvercle 1 à proximité de la partie rabattue 13, ces deuxièmes moyens de maintien 72 permettant d'assurer le positionnement du couvercle 1 par rapport à la caisse 2 suivant la direction verticale Z ;
- des troisièmes moyens de maintien 73 disposés sur la troisième traverse 65 afin de supporter la partie rabattue 13 du couvercle 1, ces troisièmes moyens de maintien 73 permettant d'assurer le positionnement du couvercle 1 par rapport à la caisse 2 suivant la direction longitudinale X.

Ces moyens de maintien 71, 72, 73 sont réalisés sous la forme d'aimants venant en appui contre le couvercle de coffre 1.

Le gabarit 6 comporte en outre des moyens de verrouillage 74 du gabarit 6 sur la partie rabattue 13 du couvercle 1, en l'occurrence un système de butée à quart de tour, montés sur la deuxième extrémité 62 de la poutre 60.

Le gabarit 6 comporte également des moyens d'appui du gabarit 6 sur l'aile latérale arrière droite 20 de la caisse 2, à savoir :
- des premiers moyens d'appui 81 disposés sur la première traverse 63 afin de venir en appui sur l'aile droite 20 de manière adjacente aux premiers moyens de maintien 71 et à la partie supérieure 12 du couvercle 1, ces premiers moyens d'appui 81 permettant d'assurer le positionnement du couvercle 1 par rapport à la caisse 2 suivant la direction verticale Z ;
- des deuxièmes moyens d'appui 82 disposés sur la deuxième traverse 64 afin de venir en appui sur l'aile droite 20 de manière adjacente aux deuxièmes moyens de maintien 72 et à la partie supérieure 12 du couvercle 1, ces deuxièmes moyens d'appui 82 permettant d'assurer le positionnement du couvercle 1 par rapport à la caisse 2 suivant la direction verticale Z ;
- des troisièmes moyens d'appui 83 disposés sur la troisième traverse 65 afin de venir en appui sur l'aile droite 20 de manière adjacente aux troisièmes moyens de maintien 73 et à la partie rabattue 13 du couvercle 1, ces troisièmes moyens de maintien 83 permettant d'assurer le positionnement du couvercle 1 par rapport à la caisse 2 suivant la direction longitudinale X.

Pour assurer le positionnement du couvercle 1 par rapport à la caisse 2 suivant la direction transversale Y, et ainsi régler le jeu droit JYD précité entre le bord latéral droit 10 du couvercle 1 et l'aile latérale arrière droite 20, le gabarit 6 comporte en outre une série de cales 90 de réglage de ce jeu JYD suivant la direction transversale Y, ces cales 90 étant d'épaisseurs distinctes et étant toutes montées sur un support 91 monté mobile sur la poutre 30 pour permettre de positionner l'une ou l'autre des différentes cales dans l'interstice entre le bord latéral droit 10 du couvercle 1 et l'aile latérale droite 20 de la caisse 2.

Le support mobile 91 est un support rotatif du type barillet, de sorte qu'il suffit de faire tourner manuellement ledit support 91 pour sélectionner l'une ou l'autre des cales 90. Le support 91 est monté rotatif autour d'un axe A sensiblement parallèle aux première et deuxième traverses 63, 64 ; cet axe A étant parallèle à la direction transversale lors du montage du couvercle de coffre 1 sur la caisse 2.

Le support mobile 91 est montée sur la poutre 30 entre les première et deuxième traverses 63, 64. Dans l'exemple des figures 5 et 6, le nombre de cales 90 est de cinq, mais il peut bien entendu être inférieur ou supérieur. Les cales 90 sont de couleurs distinctes afin d'identifier rapidement et visuellement les cales de même épaisseur entre côté droit et côté gauche du véhicule ; deux cales de même épaisseur et de deux gabarits différents ayant bien entendu la même couleur. En variante, des repères ou informations visuelles sont bien entendu envisageables sur les cales. Les cales 90 de différentes épaisseurs couvrent une plage de réglage compatible avec les jeux attendus en fonction des dimensions et formes du couvercle de coffre 1 et de la caisse 2.

Le gabarit 6 comprend également des moyens de verrouillage 92 conçus pour verrouiller le support 91 dans son mouvement et ainsi bloquer la cale sélectionnée dans la bonne position. Ces moyens de verrouillage comportent un doigt 92 coopérant avec le support 91, ce doigt 92 verrouillant le support 91 dans une première position et autorisant le mouvement du support 91 dans une seconde position. Pour définir ces deux positions, soit c'est le doigt 92 qui se déplace par rapport au support 91, soit c'est l'inverse.

Pour le montage du couvercle de coffre 1 sur la caisse 2 en utilisant deux gabarits conformes à l'invention, dont un premier gabarit à utiliser sur le côté latéral droit du véhicule et un second gabarit à utiliser sur le côté latéral gauche du véhicule, il faut suivre les étapes suivantes :
- ouverture des moyens de verrouillage 92 pour déverrouiller les supports 91 des deux gabarits ;
- mis en mouvement des supports 91 des deux gabarits pour sélectionner des cales 90 de même épaisseur sur les deux gabarits, l'emploi des couleurs facilitant et validant cette opération ;
- fermeture des moyens de verrouillage 92 pour verrouiller les supports 91 des deux gabarits ;
- le premier gabarit est monté sur le côté latéral droit du véhicule en maintenant le bord latéral droit 10 du couvercle 1 et en venant en appui sur l'aile latérale droite 20 de la caisse 2.
- le second gabarit est monté sur le côté latéral droit du véhicule en maintenant le bord latéral gauche 11 du couvercle 1 et en venant en appui sur l'aile latérale gauche 21 de la caisse 2.

## Revendications

1. Gabarit (6) de montage d'un couvercle (1) de coffre sur une caisse (2) de véhicule automobile, du type comprenant une structure (60, 63, 64, 65) sur laquelle sont montés des moyens de maintien (71, 72, 73) du couvercle (1) destinés à maintenir un bord latéral (10) dudit couvercle (1) et des moyens d'appui (81, 82, 83) du gabarit (6) sur une aile latérale (20) de la caisse (2), ces moyens de maintien et ces moyens d'appui permettant d'assurer le positionnement du couvercle par rapport à la caisse (2) suivant une direction verticale (Z) et une direction longitudinale (X) du véhicule, **caractérisé en ce qu'**il comporte en outre une série de cales (90) de réglage du jeu (JYD) entre le bord latéral (10) du couvercle (1) et l'aile latérale (20) de la caisse (2) suivant une direction transversale (Y) du véhicule, lesdites cales (90) étant d'épaisseurs distinctes et étant toutes montées sur un support (91) monté mobile sur la structure (60, 63, 64, 65) pour permettre de positionner l'une ou l'autre des différentes cales (90) dans l'interstice entre le bord latéral (10) du couvercle (1) et l'aile latérale (20) de la caisse (2) afin de permettre le réglage dudit jeu (JYD), comprenant des moyens de verrouillage (92) conçus pour verrouiller le support (91) mobile dans son mouvement, lesquels moyens de verrouillage comportent un doigt (92) coopérant avec le support (91) mobile, ledit doigt (92) verrouillant ledit support (91) dans une première position et autorisant le mouvement du support (91) mobile dans une seconde position.

2. Gabarit (6) selon la revendication 1, dans lequel le support (91) mobile est un support (91) rotatif, notamment du type barillet.

3. Gabarit (6) selon les revendications 1 ou 2, dans lequel le jeu de cales (90) comprend entre trois et huit cales (90) d'épaisseurs distinctes.

4. Gabarit (6) selon l'une quelconque des revendications 1 à 3, comprenant des moyens d'actionnement conçus pour mettre en mouvement le support (91) mobile afin de permettre le positionnement de l'une ou l'autre des différentes cales (90) dans l'interstice entre le bord latéral (10) du couvecle (1) et l'aile latérale (20) de la caisse (2).

5. Gabarit (6) selon la revendication 4, dans lequel les moyens d'actionnement sont manuels.

6. Gabarit (6) selon l'une quelconque des revendications 1 à 5, dans lequel les cales (90) présentent des moyens de signalisation visuelle distincts, notamment réalisés sous la forme de couleurs distinctes, permettant de distinguer visuellement les cales (90) entre elles.

7. Kit de montage d'un couvercle de coffre (1) sur une caisse (2) de véhicule automobile, du type comportant deux gabarits (6) indépendants et conformes à l'une quelconque des revendications 1 à 6, dont un premier gabarit à utiliser sur le côté latéral droit du véhicule et un second gabarit à utiliser sur le côté latéral gauche du véhicule.

8. Procédé de montage d'un couvercle (1) de coffre sur une caisse (2) de véhicule automobile, consistant à utiliser un kit conforme à la revendication 7 de la façon suivante :
- les supports (91) mobiles des deux gabarits (6) sont préalablement mis en mouvement pour sélectionner des cales (90) de même épaisseur sur les deux gabarits (6) ;
- le premier gabarit (6) est utilisé sur le côté latéral droit du véhicule en maintenant le bord latéral droit (10) du couvercle (1) et en venant en appui sur l'aile latérale droite (20) de la caisse (2) ;
- le second gabarit est utilisé sur le côté latéral gauche du véhicule en maintenant le bord latéral gauche (11) du couvercle (1) et en venant en appui sur l'aile latérale gauche (21) de la caisse (2).

## Patentansprüche

1. Lehre (6) für die Montage einer Kofferraumhaube (1) auf eine Karosserie (2) eines Kraftfahrzeugs, des Typs, die eine Struktur (60, 63, 64, 65) umfasst, auf die Haltemittel (71, 42, 73) der Haube (1) installiert sind, die dazu bestimmt sind, einen seitlichen Rand (10) der Haube (1) zu halten, und Mittel (81, 82, 83) zum Anlegen der Lehre (6) auf einem seitlichen Flügel (20) der Karosserie (2), wobei die Haltemittel und die Andrückmittel es erlauben, die Positionierung der Haube in Bezug zu der Karosserie (2) entlang einer vertikalen Richtung (Z) und einer Längsrichtung (X) des Fahrzeugs sicherzustellen, **dadurch gekennzeichnet, dass** sie außerdem eine Reihe von Keilen (90) zum Einstellen des Spiels (JYD) zwischen dem seitlichen Rand (10) der Haube (1) und dem seitlichen Flügel (20) der Karosserie (2) entlang einer Querrichtung (Y) des Fahrzeugs umfasst, wobei die Keile (90) unterschiedliche Stärken haben und alle auf einem Träger (91) installiert sind, der auf der Struktur (60, 63, 64, 65) beweglich installiert ist, um es zu erlauben, den einen oder den anderen der unterschiedlichen Keile (90) in dem Zwischenraum zwischen dem seitlichen Rand (10) der Haube (1) und dem seitlichen Flügel (20) der Karosserie (2) zu positionieren, um die Einstellung des Spiels (JYD) zu erlauben, die Verriegelungsmittel (92) umfasst, die konzipiert sind, um den beweglichen Träger (91) in seiner Bewegung zu verriegeln, wobei die Verriegelungsmittel einen Finger (92) umfassen, der mit dem beweglichen Träger (91) zusammenwirkt, wobei der Finger (92) den Träger (91) in einer ersten Position verriegelt und die Bewegung des beweglichen Trägers (91) in eine zweite Position erlaubt.

2. Lehre (6) nach Anspruch 1, wobei der bewegliche Träger (91) ein drehender Träger (91), insbesondere des Trommeltyps, ist.

3. Lehre (6) nach den Ansprüchen 1 oder 2, wobei der Satz von Keilen (90) zwischen drei und acht Keile (90) mit unterschiedlichen Stärken umfasst.

4. Lehre (6) nach einem der Ansprüche 1 bis 3, die Betätigungsmittel umfasst, die konzipiert sind, um den beweglichen Träger (91) in Bewegung zu versetzen, um sein Positionieren von dem einen oder dem anderen der unterschiedlichen Keile (90) in den Zwischenraum zwischen dem seitlichen Rand (10) der Haube (1) und dem seitlichen Flügel (20) der Karosserie (2) zu erlauben.

5. Lehre (6) nach Anspruch 4, wobei die Betätigungsmittel manuell sind.

6. Lehre (6) nach einem der Ansprüche 1 bis 5, wobei die Keile (90) separate Mittel zur visuellen Signalisierung aufweisen, die insbesondere in der Form unterschiedlicher Farben ausgeführt sind, die es erlauben, die Keile (90) visuell voneinander zu unterscheiden.

7. Montagebausatz einer Kofferraumhaube (1) auf einer Karosserie (2) eines Kraftfahrzeugs, des Typs, der zwei unabhängige Lehren (6) nach einem der Ansprüche 1 bis 6 umfasst, von welchen eine auf der rechten Seite des Fahrzeugs und eine zweite auf der linken Seite des Fahrzeugs zu verwenden ist.

8. Verfahren zur Montage einer Kofferraumhaube (1) auf eine Karosserie (2) eines Kraftfahrzeugs, das darin besteht, einen Bausatz nach Anspruch 7 wie folgt zu verwenden:
- die beweglichen Träger (91) der zwei Lehren (6) werden zuvor in Bewegung versetzt, um Keile (90) mit gleicher Stärke auf den zwei Lehren (6) auszuwählen,
- die erste Lehre (6) wird auf der rechten Seite des Fahrzeugs unter Halten des rechten Rands (10) der Haube (1) und durch zum Aufliegenkommen auf dem rechten Flügel (20) der Karosserie (2) verwendet,
- die zweite Lehre wird auf der linken Seite des Fahrzeugs unter Halten des linken Rands (11) der Haube (1) und zum Aufliegenkommen auf dem linken Flügel (21) der Karosserie (2) verwendet.

## Claims

1. A gauge (6) for mounting a tailgate (1) on a car body (2), of the type including a structure (60, 63, 64, 65) on which are mounted means (71, 72, 73) for retaining the tailgate (1) intended to retain a lateral edge (10) of the said tailgate (1) and support means (81, 82, 83) of the gauge (6) on a lateral wing (20) of the body (2), these retaining means and these support means permitting the positioning of the tailgate to be ensured with respect to the body (2) along a vertical direction (Z) and a longitudinal direction (X) of the vehicle, **characterized in that** it further comprises a series of adjusting shims (90) of the clearance (JYD) between the lateral edge (10) of the tailgate (1) and the lateral wing (20) of the body (2) along a transverse direction (Y) of the vehicle, the said shims (90) being of distinct thicknesses and all being mounted on a support (91) mounted movably on the structure (60, 63, 64, 65) to permit one or other of the different shims (90) to be positioned in the gap between the lateral edge (10) of the cover (1) and the lateral wing (20) of the body (2) so as to permit the adjustment of the said clearance (JYD), including locking means (92) designed to lock the movable support (91) in its movement, which locking means comprise a pin (92) cooperating with the movable support (91), the said pin (92) locking the said support (91) in a first position and permitting the movement of the movable support (91) in a second position.

2. The gauge (6) according to Claim 1, in which the movable support (91) is a rotary support (91), in particular of the barrel type.

3. The gauge (6) according to Claims 1 or 2, in which the set of shims (90) includes between three and eight shims (90) of distinct thicknesses.

4. The gauge (6) according to any one of Claims 1 to 3, including actuating means designed to set in motion the movable support (91) so as to permit the positioning of one or other of the different shims (90) in the gap between the lateral edge (10) of the tailgate (1) and the lateral wing (20) of the body (2).

5. The gauge (6) according to Claim 4, in which the actuating means are manual.

6. The gauge (6) according to any one of Claims 1 to 5, in which the shims (90) have distinct visual signalling means, in particular realized in the form of distinct colours, permitting the shims (90) to be distinguished from one another visually.

7. A mounting kit of a tailgate (1) on a car body (2), of the type comprising two independent gauges (6) according to any one of Claims 1 to 6, a first gauge to be used on the lateral right-hand side of the vehicle and a second gauge to be used on lateral left-hand side of the vehicle.

8. A method for mounting a tailgate (1) on a car body (2), consisting in using a kit according to Claim 7 in the following manner:
- the movable supports (91) of the two gauges (6) are previously set in motion to select shims (90) of the same thickness on the two gauges (6);
- the first gauge (6) is used on the lateral right-hand side of the vehicle, retaining the lateral right-hand edge (10) of the tailgate (1) and coming to rest on the lateral right-hand wing (20) of the body (2);
- the second gauge is used on the lateral left-hand side of the vehicle, retaining the lateral left-hand edge (11) of the tailgate (1) and coming to rest on the lateral left-hand wing (21) of the body (2).
